# EUROPEAN PATENT SPECIFICATION

(11) **EP 2 992 986 B1**
(45) Date of publication and mention of the grant of the patent: **07.06.2023**
(21) Application number: 14183417.6
(22) Date of filing: 03.09.2014
(51) Int. Cl.: B29C 64/35, B29C 64/357, B22F 10/28, B22F 10/34, B22F 10/73, B22F 10/77, B01D 46/00, B28B 1/00, B33Y 10/00, B33Y 30/00, B33Y 40/00, B22F 12/41, B22F 12/44, B22F 10/32, B22F 12/70

(54) **Apparatus for producing three-dimensional work pieces by additive layer manufacturing method which comprises a drying device**
Vorrichtung zur Herstellung von 3D-Werkstücken durch schichtweises Aufbauverfahren mit einer Trockenvorrichtung
Appareil de fabrication de pièces 3D par une méthode de fabrication additive comportant un dispositif de séchage

(43) Date of publication of application: 09.03.2016
(73) Proprietor: SLM Solutions Group AG, 23560 Lübeck (DE)
(72) Inventor: Junker, Frank, 41462 Neuss (DE); Pörtner, Stefan, 41179 Mönchengladbach (DE); Wiesner, Andreas, 23560 Lübeck (DE); Schwarze, Dieter, 23560 Lübeck (DE)
(74) Representative: Schicker, Silvia

(56) References cited:
- EP-A2- 1 700 686
- WO-A2-98/28124
- CN-U- 201 446 232
- DE-A1-102009 040 582
- DE-A1-102011 088 158
- FR-A1- 2 998 496
- US-A1- 2001 045 678
- US-A1- 2007 012 186
- US-A1- 2012 202 012

## Description

The invention relates to an apparatus for producing three-dimensional work pieces by irradiating layers of a raw material powder with electromagnetic or particle radiation. Further, the invention relates to a method of operating such an apparatus for producing three-dimensional work pieces by irradiating layers of a raw material powder with electromagnetic or particle radiation.

Powder bed fusion is an additive layering process by which pulverulent, in particular metallic and/or ceramic raw materials can be processed to three-dimensional work pieces of complex shapes. To that end, a raw material powder layer is applied onto a carrier and subjected to laser radiation in a site selective manner in dependence on the desired geometry of the work piece that is to be produced. The laser radiation penetrating into the powder layer causes heating and consequently melting or sintering of the raw material powder particles. Further raw material powder layers are then applied successively to the layer on the carrier that has already been subjected to laser treatment, until the work piece has the desired shape and size. An apparatus for producing moulded bodies from pulverulent raw materials by a powder bed fusion process is described, for example, in EP 1 793 979 B1. Powder bed fusion may be employed for the production of prototypes, tools, replacement parts, high value components or medical prostheses, such as, for example, dental or orthopaedic prostheses, on the basis of CAD data.

The prior art apparatus comprises a process chamber which accommodates a plurality of carriers for the shaped bodies to be manufactured. A powder layer preparation system comprises a powder reservoir holder that can be moved to and fro across the carriers in order to apply a raw material powder to be irradiated with a laser beam onto the carriers. The process chamber is provided with a protective gas inlet and a protective gas outlet which are connected to a protective gas circuit. Via the protective gas inlet, a protective gas such as, for example, Argon is supplied to the process chamber in order to establish a protective gas atmosphere within the process chamber. Via the protective gas outlet, protective gas which, upon flowing through the process chamber, is loaded with particulate impurities such as, for example, residual raw material powder particles and welding smoke particles is be withdrawn from the process chamber.

Within the protective gas circuit, a filter device is arranged which serves to filter the particulate impurities from the protective gas flowing though the protective gas circuit prior to the protective gas being recirculated to the process chamber via the protective gas inlet. When a filter medium provided in the filter device is loaded with particles separated from the protective gas stream flowing though the protective gas circuit, operation of the apparatus is ceased and the filter medium is exchanged. During exchange of the filter medium, ambient air and hence humidity contained in the ambient air enters the protective gas circuit.

WO 98/28124 A2 discloses a printer forming three-dimensional objects from a powder by selectively applying a binder liquid to incremental layers of the powder. The binder binds layers of the powder into solid two-dimensional cross sections of the desired object provided from memory. The printer can use dithering and halftoning techniques to shade the object and can also print in color. A filtration system removes airborne powder and recirculates the clean air. The printer also includes additional features to manage excess and airborne powder.

DE 10 2011 088 158 A1 discloses a secondary circuit for a device for producing three-dimensional metal objects used in a beam fusion plant. The secondary circuit has an overflow container that is provided for receiving excess powder from a space of the device. A return line is provided for recycling of powder from the overflow container in a main circuit of the device. An overflow pipe is provided for transfer of powder from installation space into overflow container. A shutoff valve is provided at overflow pipe. The overflow container is provided with level sensor.

US 2007/012186 A1 discloses a system and a method of reducing the amount of water vapor from a gas or mixture of gases such as air while removing any particulate matter from the gas. The system includes a dehumidifying filtering device comprising a desiccant associated with a filter medium of the device. In one example, the desiccant material is contained in individual packets and distributed in association with the filter medium. In another example, the desiccant material is self-contained and distributed to at least one surface of the filter medium.

DE 10 2009 040 582 A1 discloses a method for the production of a laser sintered body with a starting powdery material and a powdery active material.

US 2012/202012 A1 discloses a layer-wise production of 3D objects that comprises inertizing a building space with an inert gas or a gas mixture, whose density is higher than that of air, and the method further includes inertizing powdered substrates in storage containers, with the inert gas or the gas mixture.

EP 1 700 686 A2 discloses a method and apparatus for forming three-dimensional objects by laser sintering that includes the use of dense phase pneumatic conveying to internally recycle overflow powder, and to thoroughly blend overflow, recovered and virgin powder to provide a consistent powder feed mix to a laser sintering machine.

CN 201 446 232 U discloses an inert atmosphere control device for enclosed circulating purification in a powder bed laser fusion machine.

FR 2 998 496 A1 discloses a powder bed laser fusion apparatus and method including circulating a neutral gas into the powder in order to decrease the moisture of the air adsorbed on a surface of the powder particles between the providing and depositing steps.

US 2001/045678 A1 discloses an apparatus and method of additive manufacturing including a feed section with a drying mechanism.

The invention is directed at the object of providing an apparatus for producing three-dimensional work pieces by irradiating layers of a raw material powder with electromagnetic or particle radiation which can be operated in a reliable manner and which allows the production of high-quality work pieces. Further, the invention is directed at the object of providing a method of operating an apparatus of this kind. The present invention is defined in the appended independent claims 1 and 6. Embodiments of the invention are defined in the dependent claims.

An apparatus for producing three-dimensional work pieces according to the invention comprises a process chamber accommodating a carrier and a powder application device for applying a raw material powder onto the carrier. In principle, the carrier may be rigidly fixed carrier. Preferably, however, the carrier is designed to be displaceable in vertical direction so that, with increasing construction height of a work piece, as it is built up in layers from the raw material powder, the carrier can be moved downwards in the vertical direction. The raw material powder preferably is a metallic powder, in particular a metal alloy powder, but may also be a ceramic powder or a powder containing different materials. The powder may have any suitable particle size or particle size distribution. It is, however, preferable to process powders of particle sizes < 100 µm.

The apparatus further comprises an irradiation device for selectively irradiating electromagnetic or particle radiation onto the raw material powder applied onto the carrier in order to produce a work piece made of said raw material powder by an additive layer construction method. Hence, the raw material powder applied onto the carrier may be subjected to electromagnetic or particle radiation in a site-selective manner in dependence on the desired geometry of the work piece that is to be produced. The irradiation device preferably is adapted to irradiate radiation onto the raw material powder which causes a site-selective melting of the raw material powder particles. The irradiation device may comprise at least one radiation source, in particular a laser source, and at least one optical unit for guiding and/or processing a radiation beam emitted by the radiation source. The optical unit may comprise optical elements such an object lens, in particular and f-theta lens, and a scanner unit, the scanner unit preferably comprising a diffractive optical element and a deflection mirror.

The apparatus for producing three-dimensional work pieces further comprises a gas circuit comprising a circulation line adapted to supply gas to the process chamber and to discharge gas loaded with particulate impurities from the process chamber. For example, a first end of the circulation line may be connected to a gas inlet of the process chamber via which a gas, for example, an inert gas may be supplied to the process chamber. A second end of the circulation line may be connected to a gas outlet of the process chamber. While the raw material powder applied onto the carrier is selectively irradiated with electromagnetic or particle radiation, gas containing particulate impurities such as, for example, raw material powder particles or welding smoke particles thus may be discharged from the process chamber via the gas outlet. The particulate impurities are removed from the process chamber in order to avoid excessive absorption of radiation energy and/or shielding of the radiation beam emitted by the radiation source of the irradiation device.

Preferably, the process chamber is sealable against the ambient atmosphere, i.e. against the environment surrounding the process chamber, in order to be able to maintain a controlled atmosphere, in particular an inert atmosphere within the process chamber. Thus, for example, an Argon atmosphere or any other suitable inert gas atmosphere may be established within the process chamber. By controlling the atmosphere within the process chamber, the occurrence of undesired chemical reactions, in particular oxidation reactions, upon irradiating the raw material powder with electromagnetic or particle radiation can be prevented.

The gas stream may be conveyed through the circulation line of the gas circuit and the process chamber by means of a suitable conveying device such as, for example, a pump. Furthermore, a filter system may be arranged in the circulation line of the gas circuit. This allows particulate impurities present in the gas stream upon exiting the process chamber to be removed from the gas stream before the gas is recirculated to the process chamber. The conveying device for conveying the gas through the circulation line of the gas circuit preferably is arranged in the circulation line downstream of the filter system thus ensuring that the conveying device is not exposed to the particulate impurities present in the gas stream upstream of the filter system.

The apparatus for producing three-dimensional work pieces further comprises a raw material powder circuit comprising a circulation line adapted to supply raw material powder to the process chamber and to discharge excess raw material powder from the process chamber. For example, a first end of the circulation line may be connected to a raw material powder inlet of the powder application device via which raw material powder may be supplied to the powder application device and hence the process chamber. A second end of the circulation line may be connected to a raw material powder outlet of the process chamber. For example, the raw material powder outlet of the process chamber may be provided in an extraction hose which extends into the interior of the process chamber and which may be guided over the carrier as desired so as to withdraw excess raw material powder from the process chamber.

The raw material powder may be conveyed through the circulation line by means of a suitable conveying device such as, for example, a blower. Furthermore, a raw material powder processing system which may comprise a screen and/or filter arrangement may be arranged in the circulation line. A raw material powder processing system disposed in the circulation line of the raw material powder circuit serves to remove coarse particles which may, for example, be formed when raw material powder particles melt upon being irradiated with electromagnetic or particle radiation within the process chamber from the raw material powder before the raw material powder is recirculated to the process chamber and re-used for building up a work piece. The conveying device for conveying the raw material powder through the circulation line of the raw material powder circuit preferably is arranged in the circulation line downstream of the raw material powder processing system thus ensuring that the conveying device is not exposed to the coarse particles contained in the raw material powder upstream of the raw material powder processing system. Finally, in the apparatus for producing three-dimensional work pieces, a drying device which contains a drying agent is arranged in at least the raw material powder circuit. By providing a drying device in at least the raw material powder circuit, residual humidity present in the raw material powder when the raw material powder is supplied to the raw material powder circuit may be removed in an effective manner. In addition, the drying device is effective in removing humidity which inevitably enters the apparatus when a filter medium provided in a filter system disposed in the circulation line of the gas circuit is exchanged.

In the apparatus, the humidity induced formation of raw material powder agglomerates can be avoided or at least significantly reduced. As a result, the processing properties of the raw material powder upon conveying of the raw material powder through the raw material powder circuit and upon applying the raw material powder onto the carrier can be enhanced. In addition, measurement errors which might occur upon measuring processing parameters relevant for the operational control of the apparatus when humidity induced raw material powder agglomerates are present in the raw material powder can be minimized. Thus, by providing a drying device in at least one of the gas circuit and the raw material powder circuit of the apparatus for producing three-dimensional work pieces, the operational reliability of the apparatus can be enhanced.

Moreover, the apparatus allows the production of high-quality work pieces, in particular with enhanced mechanical properties, since the reduction of the humidity within the apparatus, which is achieved by the provision of the drying device, leads to a reduction of hydrogen induced porosity in the three-dimensional work pieces to be generated by means of the apparatus. Furthermore, also raw material powders having a high affinity to hydrogen, e.g. due to a high solubility of hydrogen in the melt of the raw material powders, and hence are prone to the formation of hydrogen induced porosity such as, for example, Aluminum, by means of the apparatus, can be processed to high-quality work pieces.

The drying device employed in the apparatus for producing three-dimensional work pieces comprises a humidity permeable container which is filled with the drying agent. For example, the humidity permeable container may be made of a rigid, solid material, such as, for example, a plastic, ceramic or metallic material which is provided with openings in order to allow humidity to enter the container and to adsorb to the drying agent. As an alternative, it is, however, also conceivable to provide the drying device with a humidity permeable container which is made of a fabric, plastic or metallic mesh.

In a preferred embodiment, the drying agent contained in the drying device is silica gel. Silica gel is a highly effective drying agent and, simultaneously, is easy and cheap to obtain. Of course, it is also conceivable to use another suitable drying agent in the drying device of the apparatus as long as undesired physical and/or chemical reactions between the drying agent and materials present in the gas circuit and/or raw material powder circuit such as the gas circulating through the gas circuit and/or the raw material powder circulating through the raw material powder circuit are avoided and as long as the drying agent is capable to withstand the temperatures and the further environmental conditions prevailing in the gas circuit and/or raw material powder circuit.

In the apparatus for producing three-dimensional work pieces, a drying device may be arranged also in the gas circuit in at least one of the circulation line and the process chamber. Usually, the process chamber provides enough space for installing at least one drying device, which serves to remove humidity from the gas atmosphere prevailing in the process chamber. For example, the drying device may be arranged in a region of the process chamber which defines a flow path for the gas which is supplied to the process chamber via the gas inlet of the process chamber and which is withdrawn from the process chamber via the gas outlet of the process chamber. A drying device which is arranged directly in the process chamber is particularly effective in removing humidity from the gas atmosphere within the process chamber, in particular in case the process chamber is not only supplied with gas via the circulation line of the gas circuit, but also with additional gas which is supplied to the process chamber, for example from an external gas source, independent of the gas circuit. However, a drying device arranged in in the process chamber, of course, not necessarily exclusively adsorbs humidity present in the gas atmosphere within the process chamber, but also may remove humidity from in the raw material powder processed within the process chamber.

A drying device which is arranged in the circulation line of the gas circuit is protected from being directly influenced by the processing conditions within the process chamber, in particular large amounts of raw material powder, high temperatures, welding smoke generated upon selectively irradiating the raw material powder and possibly also radiation emitted by the irradiation device, and is particularly effective in removing humidity from gas exiting the process chamber before the gas is recirculated into the process chamber. Of course, if desired, the apparatus may be provided with plural drying devices which may be arranged in the circulation line of the gas circuit and/or the process chamber.

As already indicated above, a filter may be arranged in the circulation line of the gas circuit so as to remove particulate impurities from the gas stream exiting the process chamber. A drying device arranged in the circulation line of the gas circuit may be arranged in said filter. For example, the drying device may be disposed in a freely suspended manner in a cylinder portion of the filter arranged in the circulation line of the gas circuit. Within the filter, there is enough installation space for the drying device. Furthermore, a drying device arranged in a filter disposed in the circulation line of the gas circuit is particularly effective in removing humidity which is introduced into the gas circuit upon exchanging a filter medium of the filter.

A drying device is arranged in the raw material powder circuit in at least one of the circulation line and the process chamber. Like in the case of the previous drying device, the process chamber also provides enough installation space for a drying device. The drying device which is arranged in the process chamber and serves to remove humidity from the raw material powder present in the process chamber, however, preferably is arranged close to the carrier for receiving the raw material powder which typically is arranged in a lower region of the process chamber, i.e. in close proximity to the raw material powder to be dried. While a drying device arranged in the process chamber is particularly effective in removing humidity from the raw material powder present in the process chamber, the drying device, however, also may be effective for drying the gas atmosphere within the process chamber.

A drying device which is arranged in the circulation line of the raw material powder circuit is protected from being directly influenced by the processing conditions within the process chamber, in particular large amounts of raw material powder, high temperatures, welding smoke generated upon selectively irradiating the raw material powder and possibly also radiation emitted by the irradiation device and is particularly effective in removing humidity from excess raw material powder which is withdrawn from the process chamber before the raw material powder is recirculated into the process chamber. The drying device may be disposed in the region of a raw material powder inlet for supplying raw material powder to the process chamber and/or in the region of a raw material powder outlet for discharging raw material powder from the process chamber. It is, however, also conceivable to arrange a drying device in a raw material powder processing system which is disposed in the circulation line of the raw material powder circuit for removing coarse particles from the raw material powder before being recirculated to the process chamber.

In a method for operating an apparatus for producing three-dimensional work pieces, a raw material powder is applied onto a carrier accommodated within a process chamber. Electromagnetic or particle radiation is selectively irradiated onto the raw material powder applied onto the carrier in order to produce a work piece made of said raw material powder by an additive layer construction method. Gas is supplied to the process chamber via a circulation line of a gas circuit. Gas loaded with particulate impurities is discharged from the process chamber via the circulation line of the gas circuit. Raw material powder is supplied to the process chamber via a circulation line of a raw material powder circuit. Excess raw material powder is discharged from a process chamber via the circulation line of the raw material powder circuit. At least the raw material powder circulating in the raw material powder circuit is dried by means of a drying device which contains a drying agent.

The drying device comprises a humidity permeable container filled with the drying agent.

The drying agent may be silica gel.

The gas circulating in the gas circuit may be dried by means of a drying device which is arranged in the gas circuit in at least one of the circulation line and the process chamber.

The gas circulating in the gas circuit may be dried by means of a drying device which is arranged in a filter arranged in the circulation line of the gas circuit.

The raw material powder circulating in the raw material powder circuit is dried by means of a drying device which is arranged in the raw material powder circuit in at least one of the second circulation line and the process chamber.

In the method for operating an apparatus for producing three-dimensional work pieces, raw material powder may be dried before being supplied to the raw material powder circuit from a raw material powder source. For example, the powder may be dried by heating or be freeze-drying. It is, however, also conceivable that raw material powder is dried by means of a drying agent before being supplied to the raw material powder circuit of the apparatus. By ensuring that raw material powder supplied to the apparatus from an external source is dried, the introduction of humidity into the apparatus can be minimized.

Similarly, gas may be dried before being supplied to the gas circuit from a gas source. For example, the gas may be dried by directing the gas through/over a drying agent before being supplied to the gas circuit of the apparatus. Again, by ensuring that gas supplied to the apparatus from an external source is dried, the introduction of humidity into the apparatus can be minimized.

The humidity within the apparatus for producing three-dimensional work pieces can further be reduced when the process chamber, the gas circuit and/or the raw material powder circuit, upon start-up or during operation of the apparatus, is flushed with dried gas for a period of time which is sufficient to displace residual gas containing a higher amount of humidity from the process chamber, the gas circuit and/or the raw material powder circuit. The process of flushing the process chamber, the gas circuit and/or the raw material powder circuit may be performed under the control of a control unit. Said control unit may, for example, be adapted to control (a) conveying device(s) for conveying gas and/or raw material powder to the process chamber, the gas circuit and/or the raw material powder circuit and/or respective valves.

In a preferred embodiment of the method for operating an apparatus for producing three-dimensional work pieces, a filter medium is dried before being installed in a filter arranged in the circulation line of the gas circuit. The amount of humidity which is introduced into the gas circuit upon exchanging the filter medium of the filter arranged in the circulation line of the gas circuit thus can be significantly reduced. In case a raw material powder processing system arranged in the circulation line of the raw material powder circuit also comprises a filter with an exchangeable filter medium, also this filter medium may be dried before being installed in the filter of the raw material powder processing system in order to minimize the introduction of humidity into the raw material powder circuit.

The filter medium may be dried for 5 to 10 hours at a temperature between 80 and 100°C. By drying the filter medium before installation in a filter arranged in the circulation line of the gas circuit overnight in an oven, the relative humidity within the gas circuit can be reduced to below 3% and can even reach values around 2%.

A preferred embodiment of the invention in the following is explained in greater detail with reference to the accompanying schematic drawing, in which:

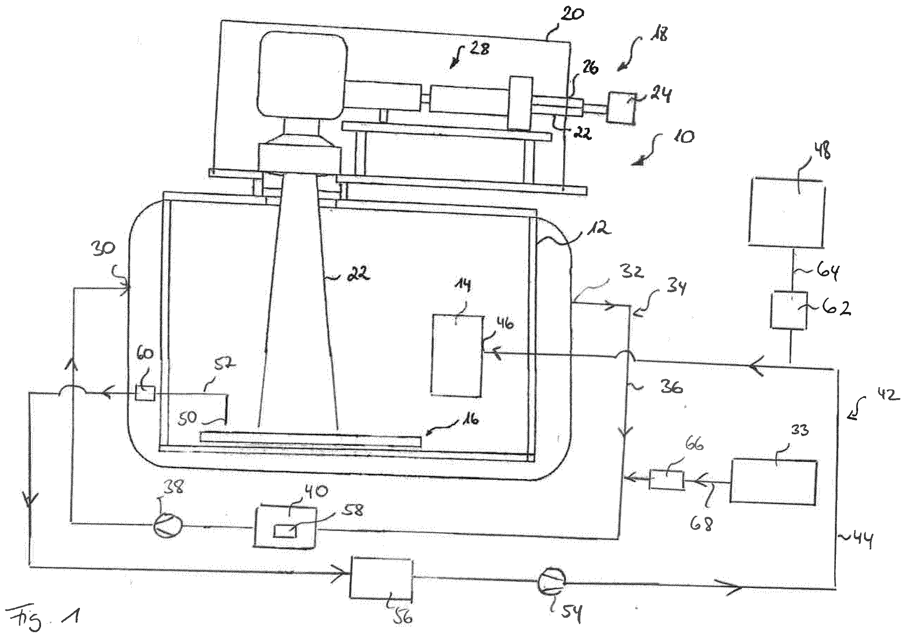

- Figure 1: shows an apparatus for producing three-dimensional work pieces.

Figure 1 shows an apparatus 10 for manufacturing a component by an additive layer construction method. The apparatus 10 comprises a process chamber 12. A powder application device 14, which is disposed in the process chamber 12, serves to apply a raw material powder onto a carrier 16. The process chamber 12 is sealable against the ambient atmosphere, i.e. against the environment surrounding the process chamber 12. The carrier 16 is designed to be displaceable in a vertical direction so that, with increasing construction height of a component, as it is built up in layers from the raw material powder on the carrier 16, the carrier 16 can be moved downwards in the vertical direction.

The apparatus 10 further comprises an irradiation device 18 for selectively irradiating laser radiation onto the raw material powder applied onto the carrier 16. By means of the irradiation device 18, the raw material powder applied onto the carrier 16 may be subjected to laser radiation in a site-selective manner in dependence on the desired geometry of the component that is to be produced. The irradiation device 18 has a hermetically sealable housing 20. A radiation beam 22, in particular a laser beam, provided by a radiation source 24, in particular a laser source which may, for example, comprise a diode pumped Ytterbium fibre laser emitting laser light at a wavelength of approximately 1070 to 1080 nm is directed into the housing 20 via an opening 26.

The irradiation device 18 further comprises an optical unit 28 for guiding and processing the radiation beam 22. The optical unit 28 may comprise a beam expander for expanding the radiation beam 22, a scanner and an object lens. Alternatively, the optical unit 28 may comprise a beam expander including a focusing optic and a scanner unit. By means of the scanner unit, the position of the focus of the radiation beam 22 both in the direction of the beam path and in a plane perpendicular to the beam path can be changed and adapted. The scanner unit may be designed in the form of a galvanometer scanner and the object lens may be an f-theta object lens.

During operation of the apparatus 10, a first layer of a component to be produced is generated on the carrier 16 by selectively irradiating the raw material powder layer applied onto the carrier 16 with the radiation beam 22. The radiation beam 22 is directed over the raw material powder layer applied onto the carrier 16 in accordance with CAD data of the component to be produced. After the first layer of the component to be produced is completed, the carrier 16 is lowered in a vertical direction allowing the application of a successive powder layer by means of the powder application device 14. Thereafter, the successive powder layer is irradiated by means of the irradiation device 18. Thus, layer by layer, the component is built up on the carrier 16.

The process chamber 12 is provided with a gas inlet 30 and a gas outlet 32. Via the gas inlet 30, a gas, for example an inert gas, provided by an inert gas source 33 is supplied to the process chamber 12. Within the process chamber 12, the gas stream takes up particulate impurities such as raw material powder particles and combustion products such as, for example, welding smoke and soot particles. Therefore, at the gas outlet 32 of the process chamber, a gas stream containing particulate impurities is discharged from the process chamber 12. The gas/particle mixture exiting the process chamber 12 is supplied to a circulation line 36 connecting the gas outlet 32 of the process chamber 12 to the gas inlet 30 of the process chamber 12. Via the circulation line 36, gas discharged from the process chamber 12 via the gas outlet 32 can be recirculated to the process chamber 12.

Thus, a gas circuit 34 is defined by the process chamber 12, i.e. a region of the process chamber 12 defining a flow path for the gas through the process chamber 12, and the circulation line 36. A conveying device 38 which is designed in the form of a pump and which is arranged in the circulation line 36 serves to convey the gas/particle mixture exiting the process chamber 12 via the gas outlet 32 through the circulation line 36. In order to avoid excessive absorption of radiation energy and/or shielding of the radiation beam 22 emitted by the radiation source 24 of the irradiation device 18, the particulate impurities which are present in the gas stream exiting the process chamber 12 via the gas outlet 32 are removed from the gas stream before the gas stream is recirculated to the process chamber 12 via the gas inlet 30 by means of a filter system 40 which is arranged in the circulation line 36 upstream of the conveying device 38.

The apparatus 10 further comprises a raw material powder circuit 42 defined by the process chamber 12 and a circulation line 44. A first end of the circulation line 44 is connected to a raw material powder inlet 46 of the powder application device 14 so as to supply raw material powder provided by a raw material powder 46 to the powder application device 14 and hence the process chamber 12. A second end of the circulation line 44 is connected to a raw material powder outlet 50 of the process chamber. In the embodiment of an apparatus 10 shown in Figure 1, the raw material powder outlet 50 of the process chamber 12 is provided in a flexible extraction hose 52 which extends into the interior of the process chamber 12 and which may be guided over the carrier 16 as desired so as to withdraw excess raw material powder from the process chamber 12.

The raw material powder is conveyed through the circulation line 44 of the raw material powder circuit 42 by means of a conveying device 54 designed in the form of blower. Furthermore, a raw material powder processing system 56 which comprised a screen arrangement is arranged in the circulation line 44 for removing coarse particles from the raw material powder discharged from the process chamber 12 before the raw material powder is recirculated to the process chamber 12 and re-used for building up a work piece. The conveying device 54 for conveying the raw material powder through the circulation line 44 of the raw material powder circuit 42 is arranged in the circulation line 44 downstream of the raw material powder processing system 56.

In the apparatus 10 for producing three-dimensional work pieces, drying devices 58, 60 are arranged in the gas circuit 34 and the raw material powder circuit 42, respectively. Specifically, the drying device 58 is arranged in the filter 40 disposed in the circulation line 36 of the gas circuit 34. The drying device 60 is arranged in the circulation line 52 of the raw material powder circuit 42 in the region of the raw material powder outlet 50. While the drying device 58 is particularly effective in removing humidity from the gas stream flowing through the gas circuit 34 and specifically from a filter medium installed in the filter 40, the drying device 60 mainly serves to remove humidity from the raw material powder discharged from the process chamber 12 before the raw material powder is recirculated to the process chamber 12.

Further, the apparatus 10 comprises a third drying device 62 which is arranged in a supply line 64 connecting the raw material powder source 48 to the raw material powder circuit 42 and which serves to dry the raw material powder supplied by the raw material powder source 48 before being introduced into the raw material powder circuit 42. Additionally or alternatively thereto, the raw material powder may be dried before being supplied to the raw material powder circuit 42 by heating or be freeze-drying. In addition, a fourth drying device 66 is arranged in a supply line 68 connecting the gas source 33 to the gas circuit 34 which serves to dry the gas supplied by the gas source 33 before being introduced into the gas circuit 34.

Each of the drying devices 58, 60, 62, 66 employed in the apparatus 10 for producing three-dimensional work pieces comprises a humidity permeable container which is filled with a drying agent. In particular, silica gel may be used as the drying agent in the drying devices 58, 60, 62, 66.

By providing the apparatus 10 with the drying devices 58, 60, 62, 66, the amount of humidity which present in the apparatus 10 and the amount of humidity which is introduced into the apparatus 10 can be minimized. As a result, the operational reliability of the apparatus 10 and the quality of the generated work pieces can be enhanced.

In order to further reduce the humidity present within the apparatus 10, the process chamber 12, the gas circuit 34 and the raw material powder circuit 42, upon start-up of the apparatus 10, is flushed with dried gas from the gas source 33 for a period of time which is sufficient to displace residual gas containing a higher amount of humidity from the process chamber 12, the gas circuit 34 and the raw material powder circuit 42. In addition, a filter medium is dried before being installed in the filter 40 arranged in the circulation line 36 of the gas circuit 34. The amount of humidity which is introduced into the gas circuit 34 upon exchanging the filter medium of the filter 40 thus can be significantly reduced. Specifically, the filter medium may be dried for 5 to 10 hours at a temperature between 80 and 100°C.

## Claims

1. Apparatus (10) for producing three-dimensional work pieces, the apparatus (10) comprising:
- a process chamber (12) accommodating a carrier (16) and a powder application device (14) for applying a raw material powder onto the carrier (16),
- an irradiation device (18) for selectively irradiating electromagnetic or particle radiation onto the raw material powder applied onto the carrier (16) in order to produce a work piece made of said raw material powder by an additive layer construction method,
- a gas circuit (34) comprising a circulation line (36) adapted to supply gas to the process chamber (12) and to discharge gas loaded with particulate impurities from the process chamber (12), and
- a raw material powder circuit (42) comprising a circulation line (44) adapted to supply raw material powder to the process chamber (12) and to discharge excess raw material powder from the process chamber (12),
**characterized in that** a drying device (60) which contains a drying agent is arranged in the raw material powder circuit (42)
wherein the drying device (60) comprises a humidity permeable container filled with the drying agent.

2. Apparatus according to claim 1,
wherein the drying agent is silica gel.

3. Apparatus according to claim 1 or 2,
wherein a further drying device (58) is arranged in the gas circuit (34) in at least one of the circulation line (36) and the process chamber (12).

4. Apparatus according to claim 3,
wherein a filter (40) is arranged in the circulation line (36) of the gas circuit (34) and the further drying device (58) is arranged in the filter (40).

5. Apparatus according to any one of claims 1 to 4,
wherein the drying device (60) is arranged in the raw material powder circuit (42) in at least one of the circulation line (44) and the process chamber (12).

6. Method for operating an apparatus (10) for producing three-dimensional work pieces, comprising:
- applying a raw material powder onto a carrier (16) accommodated within a process chamber (12),
- selectively irradiating electromagnetic or particle radiation onto the raw material powder applied onto the carrier (16) in order to produce a work piece made of said raw material powder by an additive layer construction method,
- supplying gas to the process chamber (12) via a circulation line (36) of a gas circuit (34) and discharging gas loaded with particulate impurities from the process chamber (12) via the circulation line (36) of the gas circuit (34), and
- supplying raw material powder to the process chamber (12) via a circulation line (44) of a raw material powder circuit (42) and discharging excess raw material powder from the process chamber (12) via the circulation line (44) of the raw material powder circuit (42),
**characterized in that** the raw material powder circulating in the raw material powder circuit (42) is dried by means of a drying device (60) which contains a drying agent wherein the drying device (60) comprises a humidity permeable container filled with the drying agent.

7. Method according to claim 6,
wherein the drying agent is silica gel.

8. Method according to claim 6 or 7,
wherein the gas circulating in the gas circuit (34) is dried by means of a further drying device (58) which is arranged in the gas circuit (34) in at least one of the circulation line (36) and the process chamber (12).

9. Method according to claim 8,
wherein the gas circulating in the gas circuit (34) is dried by means of the further drying device (58) which is arranged in a filter (40) arranged in the circulation line (36) of the gas circuit (34).

10. Method according to any one of claims 6 to 9,
wherein the raw material powder circulating in the raw material powder circuit (42) is dried by means of the drying device (60) which is arranged in the raw material powder circuit (42) in at least one of the circulation line (44) and the process chamber (12).

11. Method according to any one of claims 6 to 10,
wherein raw material powder is dried before being supplied to the raw material powder circuit (42) from a raw material powder source (48) and/or wherein gas is dried before being supplied to the gas circuit (34) from a gas source (33).

12. Method according to any one of claims 6 to 11,
wherein a filter medium is dried before being installed in a filter (40) arranged in the circulation line (36) of the gas circuit (34).

13. Method according to claim 12,
wherein the filter medium is dried for 5 to 10 hours at a temperature between 80 and 100°C.

## Patentansprüche

1. Vorrichtung (10) zur Herstellung eines dreidimensionalen Werkstücks, wobei die Vorrichtung (10) umfasst:
- eine Prozesskammer (12), die einen Träger (16) aufnimmt, und eine Pulverauftragsvorrichtung (14) zum Auftragen eines Rohstoffpulvers auf den Träger (16),
- eine Bestrahlungsvorrichtung (18) zum selektiven Bestrahlen des auf den Träger (16) aufgetragenen Rohstoffpulvers mit elektromagnetischer Strahlung oder Teilchenstrahlung, um ein aus dem Rohstoffpulver hergestelltes Werkstück durch ein additives Schichtbauverfahren zu erzeugen,
- einen Gaskreislauf (34) mit einer Zirkulationsleitung (36), die dazu eingerichtet ist, der Prozesskammer (12) Gas zuzuführen und mit partikelförmigen Verunreinigungen beladenes Gas aus der Prozesskammer (12) abzuführen, und
- einen Rohstoffpulverkreislauf (42), der eine Zirkulationsleitung (44) umfasst, die dazu eingerichtet ist, der Prozesskammer (12) Rohstoffpulver zuzuführen und überschüssiges Rohstoffpulver aus der Prozesskammer (12) abzuführen,
**dadurch gekennzeichnet, dass** in dem Rohstoffpulverkreislauf (42) eine Trocknungsvorrichtung (60) angeordnet ist, die ein Trocknungsmittel enthält wobei die Trocknungsvorrichtung (60) einen mit dem Trocknungsmittel gefüllten feuchtigkeitsdurchlässigen Behälter aufweist.

2. Vorrichtung nach Anspruch 1,
wobei das Trocknungsmittel Silikagel ist.

3. Vorrichtung nach Anspruch 1 oder 2,
wobei eine weitere Trocknungsvorrichtung (58) in dem Gaskreislauf (34) in der Zirkulationsleitung (36) und/oder in der Prozesskammer (12) angeordnet ist.

4. Vorrichtung nach Anspruch 3,
wobei in der Zirkulationsleitung (36) des Gaskreislaufs (34) ein Filter (40) angeordnet ist und die weitere Trocknungsvorrichtung (58) in dem Filter (40) angeordnet ist.

5. Vorrichtung nach einem der Ansprüche 1 bis 4,
wobei die Trocknungsvorrichtung (60) in dem Rohstoffpulverkreislauf (42) in der Zirkulationsleitung (44) und/oder in der Prozesskammer (12) angeordnet ist.

6. Verfahren zum Betreiben einer Vorrichtung (10) zur Herstellung eines dreidimensionalen Werkstücks, das umfasst:
- Auftragen eines Rohstoffpulvers auf einen in einer Prozesskammer (12) aufgenommenen Träger (16),
- selektives Bestrahlen des auf den Träger (16) aufgetragenen Rohstoffpulvers mit elektromagnetischer Strahlung oder Teilchenstrahlung, um ein aus dem Rohstoffpulver hergestelltes Werkstück durch ein additives Schichtbauverfahren zu erzeugen,
- Zuführen von Gas in die Prozesskammer (12) über eine Zirkulationsleitung (36) eines Gaskreislaufs (34) und Abführen von mit partikelförmigen Verunreinigungen beladenem Gas aus der Prozesskammer (12) über die Zirkulationsleitung (36) des Gaskreislaufs (34), und
- Zuführen von Rohstoffpulver in die Prozesskammer (12) über eine Zirkulationsleitung (44) eines Rohstoffpulverkreislaufs (42) und Abführen von überschüssigem Rohstoffpulver aus der Prozesskammer (12) über die Zirkulationsleitung (44) des Rohstoffpulverkreislaufs (42),
**dadurch gekennzeichnet, dass** das in dem Rohstoffpulverkreislauf (42) zirkulierende Rohstoffpulver mittels einer Trocknungsvorrichtung (60) getrocknet wird, die ein Trocknungsmittel enthält, wobei die Trocknungsvorrichtung (60) einen mit dem Trocknungsmittel gefüllten feuchtigkeitsdurchlässigen Behälter aufweist.

7. Verfahren nach Anspruch 6,
wobei das Trocknungsmittel Silikagel ist.

8. Verfahren nach Anspruch 6 oder 7,
wobei das in dem Gaskreislauf (34) zirkulierende Gas mittels einer weiteren Trocknungsvorrichtung (58) getrocknet wird, die in dem Gaskreislauf (34) in der Zirkulationsleitung (36) und/oder in der Prozesskammer (12) angeordnet ist.

9. Verfahren nach Anspruch 8,
wobei das in dem Gaskreislauf (34) zirkulierende Gas mittels der weiteren Trocknungsvorrichtung (58) getrocknet wird, die in einem in der Zirkulationsleitung (36) des Gaskreislaufs (34) angeordneten Filter (40) angeordnet ist.

10. Verfahren nach einem der Ansprüche 6 bis 9,
wobei das in dem Rohstoffpulverkreislauf (42) zirkulierende Rohstoffpulver mittels der Trocknungsvorrichtung (60) getrocknet wird, die in dem Rohstoffpulverkreislauf (42) in der Zirkulationsleitung (44) und/oder in der Prozesskammer (12) angeordnet ist.

11. Verfahren nach einem der Ansprüche 6 bis 10,
wobei Rohstoffpulver vor der Zuführung von einer Rohstoffpulverquelle (48) in den Rohstoffpulverkreislauf (42) getrocknet wird und/oder wobei Gas vor der Zuführung von einer Gasquelle (33) in den Gaskreislauf (34) getrocknet wird.

12. Verfahren nach einem der Ansprüche 6 bis 11,
wobei ein Filtermedium getrocknet wird, bevor es in einen in der Zirkulationsleitung (36) des Gaskreislaufs (34) angeordneten Filter (40) eingebaut wird.

13. Verfahren nach Anspruch 12,
wobei das Filtermedium 5 bis 10 Stunden lang bei einer Temperatur zwischen 80 und 100°C getrocknet wird.

## Revendications

1. Appareil (10) permettant de produire des pièces à travailler tridimensionnelles, l'appareil (10) comprenant :
- une chambre de processus (12) logeant un support (16) et un dispositif d'application de poudre (14) permettant d'appliquer une poudre de matière première sur le support (16),
- un dispositif de rayonnement (18) permettant de soumettre sélectivement au rayonnement de particule ou électromagnétique la poudre de matière première appliquée sur le support (16) afin de produire une pièce à travailler faite à partir de ladite poudre de matière première selon un procédé de fabrication additive par couche,
- un circuit de gaz (34) comprenant une conduite de circulation (36) conçue pour alimenter en gaz la chambre de processus (12) et pour évacuer le gaz chargé d'impuretés particulaires provenant de la chambre de processus (12), et
- un circuit de poudre de matière première (42) comprenant une conduite de circulation (44) conçue pour alimenter en poudre de matière première la chambre de processus (12) et pour évacuer l'excès de poudre de matière première provenant de la chambre de processus (12),
**caractérisé en ce qu'**un dispositif de séchage (60) qui contient un agent dessiccatif est disposé dans le circuit de poudre de matière première (42) dans lequel le dispositif de séchage (60) comprend un récipient perméable à l'humidité rempli de l'agent dessiccatif.

2. Appareil selon la revendication 1,
dans lequel l'agent dessiccatif est un gel de silice.

3. Appareil selon la revendication 1 ou 2,
dans lequel un autre dispositif de séchage (58) est disposé dans le circuit de gaz (34) dans au moins l'un parmi la conduite de circulation (36) et la chambre de processus (12).

4. Appareil selon la revendication 3,
dans lequel un filtre (40) est disposée dans la conduite de circulation (36) du circuit de gaz (34) et l'autre dispositif de séchage (58) est disposé dans le filtre (40).

5. Appareil selon l'une quelconque des revendications 1 à 4,
dans lequel le dispositif de séchage (60) est disposé dans le circuit de poudre de matière première (42) dans au moins l'une parmi la conduite de circulation (44) et la chambre de processus (12).

6. Procédé de fonctionnement d'un appareil (10) permettant de fabriquer des pièces à travailler tridimensionnelles, consistant à :
- appliquer une poudre de matière première sur un support (16) logé à l'intérieur d'une chambre de processus (12),
- soumettre sélectivement au rayonnement de particule ou électromagnétique la poudre de matière première appliquée sur le support (16) afin de produire une pièce à travailler faite à partir de ladite poudre de matière première selon un procédé de fabrication additive par couche,
- alimenter en gaz la chambre de processus (12) par l'intermédiaire d'une ligne de circulation (36) d'un circuit de gaz (34) et évacuer le gaz chargé d'impuretés particulaires provenant de la chambre de processus (12), et
- alimenter en poudre de matière première une chambre de processus (12) par l'intermédiaire d'une conduite de circulation (44) d'un circuit de poudre de matière première (42) et évacuer l'excès de poudre de matière première provenant de la chambre de processus (12) par l'intermédiaire de la conduite de circulation (44) du circuit de poudre de matière première (42),
**caractérisé en ce que** la poudre de matière première circulant dans le circuit de poudre de matière première (42) est séchée au moyen d'un dispositif de séchage (60) qui contient un agent dessiccatif, dans lequel le dispositif de séchage (60) comprend un récipient perméable à l'humidité rempli de l'agent dessiccatif.

7. Procédé selon la revendication 6,
dans lequel l'agent dessiccatif est un gel de silice.

8. Procédé selon la revendication 6 ou 7,
dans lequel le gaz circulant dans le circuit de gaz (34) est séché au moyen d'un autre dispositif de séchage (58) qui est disposé dans le circuit de gaz (34) dans au moins l'une parmi la conduite de circulation (36) et la chambre de processus (12).

9. Procédé selon la revendication 8,
dans lequel le gaz circulant dans le circuit de gaz (34) est séché au moyen de l'autre dispositif de séchage (58) qui est disposé dans un filtre (40) disposé dans la conduite de circulation (36) du circuit de gaz (34).

10. Procédé selon l'une quelconque des revendications 6 à 9,
dans lequel la poudre de matière première circulant dans le circuit de poudre de matière première (42) est séchée au moyen du dispositif de séchage (60) qui est disposé dans le circuit de poudre de matière première (42) dans au moins l'une parmi la conduite de circulation (44) et la chambre de processus (12).

11. Procédé selon l'une quelconque des revendications 6 à 10,
dans lequel la poudre de matière première est séchée avant qu'elle ne soit fournie au circuit de poudre de matière première (42) en provenance d'une source de poudre de matière première (48) et/ou dans lequel le gaz est séché avant qu'il ne soit fourni au circuit de gaz (34) en provenance d'une source de gaz (33).

12. Procédé selon l'une quelconque des revendications 6 à 11,
dans lequel un milieu filtrant est séché avant qu'il ne soit installé dans un filtre (40) disposé dans la conduite de circulation (36) du circuit de gaz (34).

13. Procédé selon la revendication 12,
dans lequel le milieu filtrant est séché pendant 5 à 10 heures à une température comprise entre 80 et 100°C.
